(19) Europäisches Patentamt
European Patent Office
Office européen des brevets

(11) **EP 1 234 977 A1**

(12) **EUROPÄISCHE PATENTANMELDUNG**

(43) Veröffentlichungstag:
**28.08.2002  Patentblatt 2002/35**

(51) Int Cl.⁷: **F03B 17/02**

(21) Anmeldenummer: **01103462.6**

(22) Anmeldetag: **14.02.2001**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(71) Anmelder: **Thien, Gerhard
15848 Beeskow (DE)**

(72) Erfinder: **Thien, Gerhard
15848 Beeskow (DE)**

(74) Vertreter:
**TER MEER STEINMEISTER & PARTNER GbR
Patentanwälte,
Mauerkircherstrasse 45
81679 München (DE)**

(54) **Vorrichtung, insbesondere zur Erzeugung eines Drehmoments**

(57)     Die Erfindung betrifft eine Vorrichtung mit umlaufenden Körpern (12). insbesondere eine Vorrichtung zur Erzeugung eines Drehmoments, mit zumindest zwei jeweils eine Hauptachse (16) aufweisenden Körpern (12), die über eine umlaufende Transporteinrichtung (10, 11) so mit einander gekoppelt sind, daß sie eine Umlaufbewegung ausführen können, bei der sich der eine Körper (12) in Richtung der Schwerkraft und der andere entgegensetzt dazu bewegt. Um zu erreichen, daß die umlaufende Bewegung der Körper (12) durch einen Wechsel der relativ Lage der einzelnen Körper (12) zur Schwerkraft praktisch nicht beeinträchtigt wird, ist vorgesehen, daß die Hauptachsen (16) der Körper (12) bei der Bewegung der Körper (12) in oder entgegen der Schwerkraft im wesentlichen parallel zur Bewegungsrichtung verlaufen, während die Körper (12) beim Wechsel der Bewegungsrichtung im wesentlichen quer zu ihrer Hauptachse (16) verschoben werden, und die Körper (12) nach jedem Wechsel der Bewegungsrichtung während ihrer Bewegung in oder entgegen der Schwerkraft so um eine quer zu ihrer Hauptachse (16) verlaufende Achse dreh- oder schwenkbar sind, daß die jeweils nachlaufende Seite des Körper (12) zur vorlaufenden wird.

Fig. 1

**Beschreibung**

Die Erfindung betrifft eine Vorrichtung, insbesondere zur Erzeugung eines Drehmoments, mit zumindest zwei Körpern, die über eine umlaufende Transporteinrichtung so miteinander gekoppelt sind, daß sie eine Umlaufbewegung ausführen können.

Aus der EP 0 930 433 ist bereits eine Vorrichtung zur Erzeugung eines Drehmoments bekannt, bei der sich während der Umlaufbewegung der eine Körper in Richtung der Schwerkraft und der andere entgegengesetzt dazu bewegt. Als Körper sind dabei Kolben-Zylinder-Einheiten vorgesehen, die jeweils in Verschieberichtung des Kolbens im Zylinder bewegt werden. Da beim Wechsel der Bewegungsrichtung die Lage von Kolben und Zylinder relativ zur Schwerkraft vertauscht wird, ändert jeder Körper beim Wechsel der Bewegungsrichtung sein Volumen so, daß das Volumen des sich in Richtung der Schwerkraft bewegenden Körpers kleiner ist als das des Körpers, der sich in entgegengesetzter Richtung bewegt. Kolben und Zylinder sind dabei relativ zur Schwerkraft so angeordnet, daß zur Verkleinerung des Volumens für die Abwärtsbewegung der Kolben durch die Schwerkraft in den Zylinder hinein verschoben wird, während er für die Aufwärtsbewegung aus dem Zylinder herausgezogen wird.

Obwohl diese Vorrichtung arbeitet, wie durch Versuche gezeigt werden konnte, wird die Umlaufbewegung dadurch beeinträchtigt, daß die einzelnen Körper, also die einzelnen Kolben-Zylinder-Einheiten beim Bewegungsrichtungswechsel um 180° gedreht werden müssen, um die Volumenänderung herbeizuführen. Die Volumenänderung erfolgt daher verhältnismäßig langsam, wodurch die jeweils im Umkehrpunkt der Bewegung befindlichen Körper praktisch keinen Beitrag zur Drehmomenterzeugung liefern können.

Ferner ist als sogenannter Paternoster ein ständig umlaufender Personenaufzug bekannt, bei dem eine Vielzahl von aneinander anschließenden Fahrkörben sich in Aufwärts- bzw. Abwärtsrichtung bewegen. Zum Bewegungsrichtungswechsel wird der jeweils oberste bzw. unterste Fahrkorb parallel zu sich selbst verschoben, um von der Aufwärts- bzw. Abwärtsbewegung in die Abwärts- bzw. Aufwärtsbewegung zu wechseln.

Der Erfindung liegt die Aufgabe zugrunde, eine weitere Vorrichtung der eingangs genannten Art bereitzustellen, bei der die umlaufende Bewegung durch einen Wechsel der relativ Lage der einzelnen Körper zur Schwerkraft praktisch nicht beeinträchtigt wird.

Diese Aufgabe wird durch die Vorrichtung nach Anspruch 1 gelöst. In den Unteransprüchen sind vorteilhafte Ausgestaltungen und Weiterbildungen der Erfindung beschrieben.

Erfindungsgemäß ist also vorgesehen, daß die Körper. deren Hauptachsen bei der Bewegung in oder entgegen der Schwerkraft im wesentlichen parallel zur Bewegungsrichtung verlaufen, beim Wechsel der Bewegungsrichtung im wesentlichen quer zu ihren Hauptachsen verschoben werden, und daß die Körper nach jedem Wechsel der Bewegungsrichtung während ihrer Bewegung in oder entgegen der Schwerkraft so um eine quer zu ihrer Hauptachse verlaufende Achse dreh- oder schwenkbar sind, daß die jeweils nachlaufende Seite des Körpers zur vorlaufenden wird.

Der Wechsel der Relativlage des Körpers zur Schwerkraft erfolgt also unabhängig vom Bewegungsrichtungswechsel, so daß die Bedingungen für den Bewegungsrichtungswechsel sowie für den Relativlagewechsel unabhängig voneinander festgelegt werden können. Insbesondere ist es möglich, auch bei relativ langen Körpern den Bewegungsrichtungswechsel auf engem Raum durchzuführen, da die Körper nicht während des Bewegungsrichtungswechsels gedreht werden müssen.

Um den Betrieb der erfindungsgemäßen Vorrichtung zu vereinfachen, ist erfindungsgemäß vorgesehen, daß die Transporteinrichtung ein endloses Transportmittel aufweist, das über eine erste und eine zweite Umlenkeinrichtung geführt ist, und daß die Körper jeweils im Bereich ihrer vorlaufenden und ihrer nachlaufenden Seite über lösbare Haltemittel mit dem Transportmittel derart verbunden sind, daß jeweils eine Dreh- oder Schwenkachse gebildet ist, um die der Körper dreh- oder schwenkbar ist, wenn die Haltemittel im Bereich der anderen Seite gelöst sind. Hierdurch läßt es sich erreichen, daß für die Änderung der Relativlage des Körpers zur Schwerkraft keine besonderen Mittel vorgesehen werden müssen, um eine Dreh- oder Schwenkbewegung des Körpers zu bewirken, da bei geeigneter Lage und Steuerung der Haltemittel ein Drehmoment am Körper angreift, das allein durch die Schwerkraft bewirkt wird.

Zweckmäßig ist es dabei, wenn als Haltemittel am Transportmittel mit Griffelementen an den Körpern zusammenwirkende Greifmittel vorgesehen sind, die zum Ergreifen und Freigeben jeweiliger Griffelemente an den Körpern steuerbar sind, wobei die Greifmittel in Längsrichtung des Transportmittels gleiche Abstände zueinander aufweisen, die gleich dem entsprechenden Abstand der Griffelemente an jedem der Körper sind.

Eine besonders vorteilhafte Ausgestaltung der Erfindung zeichnet sich dadurch aus, daß die Greifmittel jeweils erste und zweite Greifer aufweisen, von denen die einen bezüglich des geschlossenen Umlaufweges innen und die anderen außen am Transportmittel vorgesehen sind und daß die jeweils eine Dreh- oder Schwenkachse des Körpers festlegenden Griffelemente so am Körper angeordnet sind, daß die jeweilige Dreh- oder Schwenkachse gegen die durch den Schwerpunkt des Körpers verlaufende Hauptachse versetzt ist. Mit dieser Anordnung läßt es sich erreichen, daß die Körper nach dem Bewegungsrichtungswechsel so am Transportmittel angebracht sind, daß die Körper leicht schräg am Transportmittel gehalten sind, so daß beim Lösen der oberen Greifmittel der Körper ohne weiteres um die unteren Greifmittel schwenken kann, um anschließend so gehalten zu werden, daß er mit dem Transportmittel in Transportrichtung ausgerichtet ist.

Hierbei ist es besonders vorteilhaft, wenn die im Bereich der vorlaufenden und der nachlaufenden Seite liegenden Dreh- oder Schwenkachsen der Körper in einer zu ihnen senkrechten, durch den Schwerpunkt des Körpers verlaufenden Ebene gesehen, einander bezüglich des Schwerpunkts des Körpers diametral gegenüberliegen.

Bei einer besonders bevorzugten Ausgestaltung der Erfindung ist hierzu vorgesehen, daß der Versatz der Dreh- oder Schwenkachsen gegen die durch den Schwerpunkt des Körpers verlaufende Hauptachse entsprechend dem Abstand der Greifer eines Greifmittels so gewählt ist, daß die Hauptachse des Körpers parallel zur Bewegungsrichtung liegt, wenn die die bezuglich des Transportmittels nach innen versetzte Dreh- oder Schwenkachse festlegenden Griffelemente von innenliegenden Greifern gehalten werden, während die die bezüglich des Transportmittels nach außen versetzte Dreh- oder Schwenkachse festlegenden Griffelemente mit außenliegenden Greifern in Eingriff sind.

Um sicherzustellen, daß die Greifmittel die Griffelemente zuverlässig erfassen können, und um zu erreichen, daß die Aufwärts- bzw. Abwärtsbewegung nicht durch seitliche Schwingungen unnötig beeinträchtigt werden, sind bei einer besonders vorteilhaften Ausgestaltung der Erfindung Mittel zum Verlangsamen und/ oder Steuern der Dreh- oder Schwenkbewegung der Körper vorgesehen.

Für die Verlangsamung der Schwenkbewegung des Körpers während seiner Abwärtsbewegung weist die Transporteinrichtung vorteilhafterweise im Bereich der Bewegung in Richtung der Schwerkraft eine Führungsbahn auf, auf der ein bei der Dreh- oder Schwenkbewegung freier Abschnitt des Körpers während der Dreh- oder Schwenkbewegung abstützbar ist. Auf diese Weise läßt es sich erreichen, daß der Körper bei der Dreh- oder Schwenkbewegung so abgebremst wird, daß er nicht wie ein Pendel durchschwingt.

Bei einer alternativen Ausgestaltung der Erfindung, ist vorgesehen, daß der Transporteinrichtung im Bereich der Bewegung in Richtung der Schwerkraft ein Zusatzgewicht zugeordnet ist, das mit einem sich in Richtung der Schwerkraft bewegenden Körper derart koppelbar ist, daß der Körper bei der gemeinsamen Drehbewegung von Körper und Zusatzgewicht im Wesentlichen eine Schwenkbewegung um den gemeinsamen Schwerpunkt ausführt. Hierdurch läßt sich nicht nur die Schwenkbewegung des Körpers in gewünschter Weise beeinflussen, sondern es läßt sich gleichzeitig eine zusätzliche, nach unten wirkende Last an das abwärtslaufende Trum der Transporteinrichtung ankoppeln, wodurch der Wirkungsgrad der erfindungsgemäßen Vorrichtung erhöht wird.

Eine vorteilhafte Weiterbildung der Erfindung zeichnet sich dadurch aus, daß der Transporteinrichtung im Bereich der Bewegung entgegen der Schwerkraft eine Stützvorrichtung zugeordnet ist, auf der ein bei der Dreh- oder Schwenkbewegung freier Abschnitt des Körpers während der Dreh- oder Schwenkbewegung abstützbar ist. Hierdurch läßt sich während der Aufwärtsbewegung ein Teil des Gewichts des drehenden oder schwenkenden Körpers abstützen, so daß die auf das Tranportmittel im Bereich der Aufwärtsbewegung wirkende Gewichtskraft der Körper zusätzlich verringert wird.

Um nach Möglichkeit das gesamte Gewicht des schwenkenden oder drehenden Körpers bei der Aufwärtsbewegung abstützen zu können, ist es besonders zweckmäßig, wenn der freie Abschnitt des Körpers während der Dreh- oder Schwenkbewegung im Wesentlichen in seinem Schwerpunkt auf Stützvorrichtung abstützbar ist.

Eine zweckmäßige Ausgestaltung der Erfindung zeichnet sich dadurch aus, daß als Transportmittel zwei zueinander parallele Transportbänder, Transportketten oder Transportriemen vorgesehen, zwischen denen die Körper angeordnet sind.

Bei einer besonders bevorzugten Ausgestaltung der Erfindung ist vorgesehen, daß jeder Körper beim Wechsel der Bewegungsrichtung sein Volumen so ändert, daß das Volumen des bzw. der sich in Richtung der Schwerkraft bewegenden Körper kleiner ist als das der sich in entgegengesetzter Richtung bewegenden Körper.

Die Änderung des Volumens jedes Körpers erfolgt also vorteilhafterweise so, daß es vergrößert wird, wenn seine nach unten, also im wesentlichen in Richtung der Schwerkraft laufende Bewegung in eine nach oben, also entgegen der Schwerkraft gerichtete Bewegung wechselt, während es sich verkleinert, sobald die Bewegung des Körpers wieder zu der nach unten gerichteten Bewegung wechselt. Durch diese beim Wechsel der Bewegungsrichtung abwechselnden Vergrößerung und Verkleinerung der Volumen der Körper wird sichergestellt, daß die sich jeweils nach oben bewegenden Körper in Folge ihres größeren Volumens eine größere Auftriebskraft erfahren, als die sich nach unten bewegenden Körper. Hierdurch wird die Umlaufbewegung der Körper bewirkt.

Dabei ist es zweckmäßig, wenn jeder Körper eine Kolben-Zylinder-Einheit umfaßt, deren Kolben in Abhängigkeit von der Ausrichtung der Kolben-Zylinder-Einheit zur Schwerkraft von der auf ihn wirkenden Gewichtskraft in seine ausgefahrene oder eingeschobene Stellung bewegbar ist und deren Zylinderkammer über eine Absperrvorrichtung mit zumindest einer weiteren Zylinderkammer einer anderen Kolben-Zylinder-Einheit verbindbar ist, wobei die Zylinderkammern aller Kolben-Zylinder-Einheiten über entsprechende Zweigleitungen mit einer Ringleitung verbunden sind, die an der Transporteinrichtung gehalten ist.

Durch die Verwendung einer Absperrvorrichtung für jeden Zylinder läßt es sich erreichen, daß die Kolben-Zylinder-Einheit unabhängig von ihrem jeweiligen effektiven Volumen während der Aufwärts- oder Abwärtsbewegung umgekehrt werden kann, ohne daß sich ihr effektives Volumen ändert. Beim Bewegungsrichtungswechsel braucht dann nur die Absperreinrichtung geöffnet zu werden, so daß der für die Volumenänderung erforderliche Austausch des in der Zylinderkammer befindlichen Mediums stattfinden kann. Als Medium kann dabei ein Gas, z. B. Luft oder Stickstoff, oder eine leichte Flüssigkeit mit geringerer Dichte als das umgegebende Medium vorgesehen sein.

Um sicherzustellen, daß die Verschiebung des Kolbens, insbesondere seine Auszugsbewegung allein aufgrund der auf ihn wirkenden Gewichtskraft erfolgen kann, ist vorgesehen, daß die Kolbenlänge $l_k$ der folgenden Gleichung genügt:

$$l_k \geq 0{,}5 * h * \frac{\rho_f}{\rho_k}$$

wobei h die maximale Eintauchtiefe des Körpers in eine Flüssigkeit, $\rho_f$ die Dichte der Flüssigkeit und $\rho_k$ die Dichte des Kolbenmaterials sind.

Die Erfindung wird im folgenden beispielsweise anhand der Zeichnung näher erläutert. Es zeigen:

Figur 1 eine stark vereinfachte schematische Darstellung einer erfindungsgemäßen Vorrichtung,

Figur 2 eine vereinfachte schematische teilweise geschnittene Darstellung einer Kolben-Zylinder-Einheit,

Figur 3 eine weiter vereinfachte schematische Darstellung einer erfindungsgemäßen Vorrichtung mit einer Vielzahl von paarweise angeordneten Körpern zur Erzeugung einer Auftriebsdifferenz,

Figur 4 verschiedene Darstellungen (a) bis (f) einer Kolben-Zylinder-Einheit, die deren Lage relativ zur Tranporteinrichtung während der Abwärtsund Aufwärtsbewegung veranschaulichen,

Figur 5 eine Darstellung einer Kolben-Zylinder-Einheit, die deren Lage bei einer Schwenkbewegung während der Aufwärtsbewegung relativ zur Tranporteinrichtung veranschaulicht, und

Figur 6 verschiedene Darstellungen (a) bis (d) einer Kolben-Zylinder-Einheit und eines Zusatzgewichtes, die das Zusammenwirken von Kolben-Zylinder-Einheit und Zusatzgewicht bei einer Dreh- oder Schwenkbewegung während der Abwärtsbewegung Kolben-Zylinder-Einheit veranschaulichen.

In den verschiedenen Figuren der Zeichnung sind einander entsprechende Bauteile mit gleichen Bezugzeichen versehen.

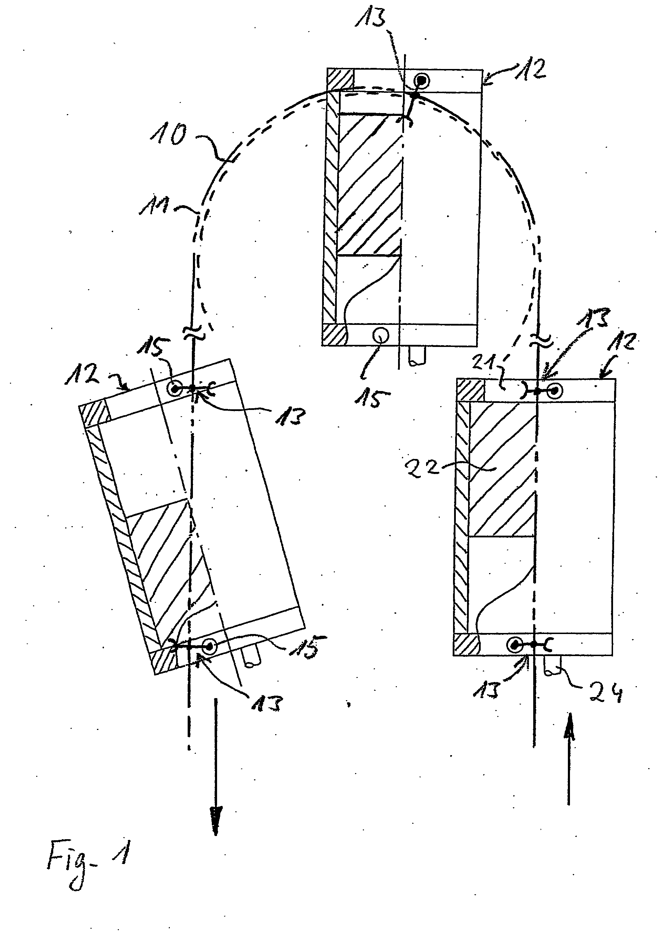

Wie Figur 1 zeigt, umfaßt die erfindungsgemäße Vorrichtung eine rein schematisch angedeutete Umlenkeinrichtung 10, über die parallele Zugelemente 11 geführt sind, zwischen denen eine Vielzahl von Kolben-Zylinder-Einheiten 12 paarweise als Körper zur Erzeugung einer Auftriebsdifferenz angebracht sind. Die Umlenkeinrichtung 10 umfaßt in nicht näher dargestellter Weise zwei koaxiale, gleich große Umlenkräder, die jeweils auf einer Welle gelagert sind, an der bzw. denen das von der erfindungsgemäßen Vorrichtung erzeugte Drehmoment abgenommen werden kann. Beispielsweise kann an die Welle oder Wellen der Umlenkeinrichtung ein Generator zur Erzeugung von elektrischer Energie angeschlossen werden.

Als Umlenkräder für die parallel zueinander verlaufenden Zugelemente 11 der Transporteinrichtung können je nach verwendetem Zugelement Zahnräder, Seiltrommeln oder dergleichen eingesetzt werden. In entsprechender Weise läßt sich das Zugelement 11 als Kette, Schubkette oder -band, Seil, Zahnriemen, Zugband oder dergleichen ausgestalten.

Um die auf die Kolben-Zylinder-Einheiten 12 wirkenden Kräfte auf die beiden parallel zueinander verlaufenden Zugelemente 11, von denen nur eines dargestellt ist, zu übertragen, ist jede Kolben-Zylinder-Einheit 12 über lösbare Haltemittel 13 am Zugelement 11 gehalten, die in Längsrichtung des Zugelements 11 voneinander beabstandet sind.

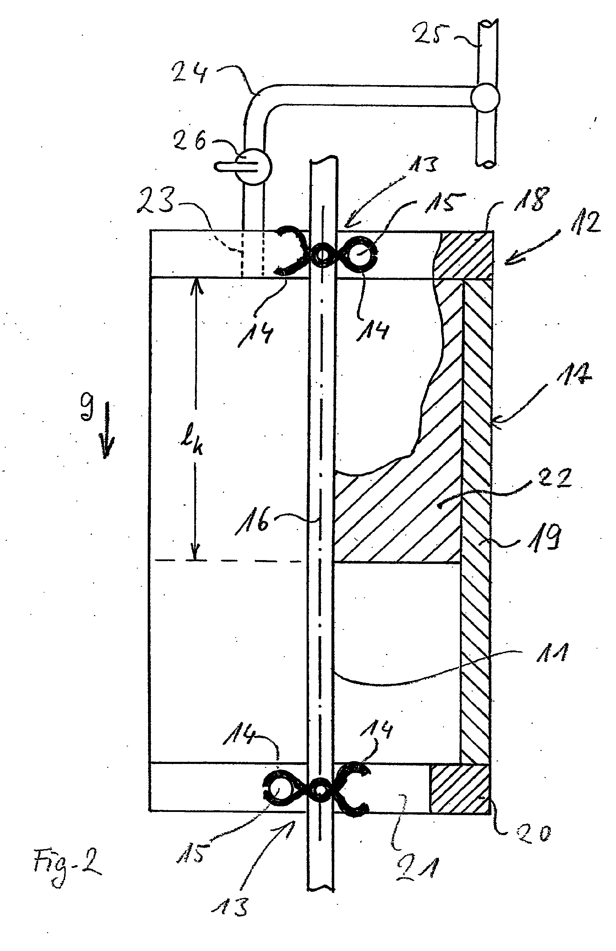

Wie besonders gut in Figur 2 zu erkennen ist, umfassen die Haltemittel als am Zugelement 11 befestigte Greifmittel jeweils zwei Greifer 14, die mit Griffelementen 15 an den Kolben-Zylinder-Einheiten 12 zusammenwirken.

Die Greifer 14 sind dabei paarweise jeweils so angeordnet, daß ein Greifer 14 in der Draufsicht von Figur 1 außen am Zugelement 11 angeordnet ist, während der andere Greifer 14 innen liegt. Ferner sind die Griffelemente 15 bezüglich einer Längsmittelebene der Kolben-Zylinder-Einheiten 12, die senkrecht zur Ebene der Umlaufbewegung, also senkrecht zur Zeichenebene steht und durch die Haupt- oder Längsachse 16 der Kolben-Zylinder-Einheit 12 festgelegt ist, so versetzt, daß wenn die in der Zeichnung jeweils oberen Griffelemente 15 rechts vom Zugelement 11 und die unteren Griffelemente 15 links vom Zugelement 11 liegen, die Kolben-Zylinder-Einheit mit ihrer Längsachse 16 parallel zu den Zugelementen 11 der Transporteinrichtung liegen.

Sind umgekehrt, wie beispielsweise in Figur 1 auf der linken Seite dargestellt ist, die oberen Griffelemente 15 links vom Zugelement und die unteren Griffelemente 15 rechts davon, so ist die Kolben-Zylinder-Einheit 12 etwas gegenüber dem Zugelement 11 verkippt, wobei der Schwerpunkt der Kolben-Zylinder-Einheit 12 in der Zeichnung links von den unteren Griffelementen 15 liegt, um ein im Gegenuhrzeigersinn wirkendes Drehmoment für die Kolben-Zylinder-Einheit 12 zu erzeugen.

Es ist auch möglich die Griffelemente 15 und die Greifer 14 so anzuordnen, daß keine Verkippung der Kolben-Zylinder-Einheiten 12 auftritt. Zweckmäßigerweise ist es jedoch vorgesehen, daß die Kolben-Zylinder-Einheiten 12 nach einem Bewegungsrichtungswechsel so gehalten werden, daß bezüglich der jeweils unteren Griffelemente 15 ein Drehmoment auf sie wirkt, das ein Dreh- oder Schwenkbewegung zur Folge hat, sobald die jeweils oberen Griffelemente 15 freigegeben werden.

Die Kolben-Zylinder-Einheit 12 umfaßt ein Zylindergehäuse 17 mit einem Boden 18, einer Zylinderwand 19 und einem Ringflansch 20, der eine Zylinderraumöffnung 21 umgibt und der einen Anschlag für einen im Zylindergehäuse verschiebbar angeordneten Kolben 22 bildet.

Im Boden 18 ist ein Fluiddurchlaß 23 vorgesehen, an den sich eine Zweigleitung 24 anschließt, die mit ihrem anderen Ende mit einer Ringleitung 25 verbunden ist. In der Zweigleitung 24 ist ein Absperrventil 26 angeordnet, das in der Zeichnung rein schematisch angedeutet und im geschlossenen Zustand dargestellt ist. Der Kolben 22 wird daher durch den Umgebungsdruck gegen die Gewichtskraft in Richtung der Erdbeschleunigung g in der in Figur 2 dargestellten oberen Stellung gehalten.

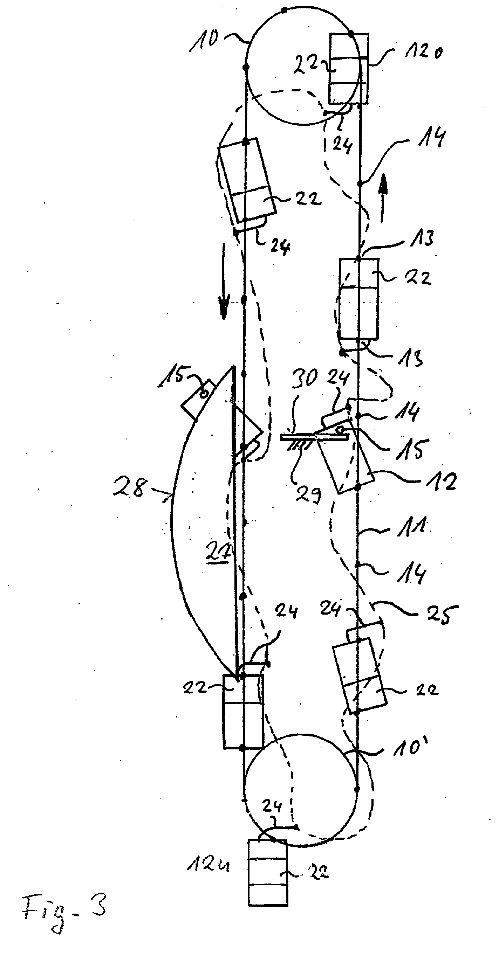

Wie in der stark schematisierten Figur 3 dargestellt ist, sind eine Vielzahl von Kolben-Zylinder-Einheiten 12 derart paarweise an den parallel zueinander liegenden Zugelementen 11, von denen in Figur 3 nur eines dargestellt ist, während das andere parallel dazu hinter der Zeichenebene liegt, daß sich jeweils gleich viele Kolben-Zylinder-Einheiten 12 in Abwärts- und in Aufwärtsrichtung bewegen, während zwei Kolben-Zylinder-Einheiten synchron zueinander die Bewegungsrichtung wechseln. Wie Figur 3 zeigt, wechselt die untere Kolben-Zylinder-Einheit 12u im Bereiche der unteren Umlenkeinrichtung 10' von der Abwärts- zur Aufwärtsbewegung, während die obere Kolben-Zylinder-Einheit 120 im Bereich der oberen Umlenkeinrichtung 10 von der Aufwärts- zur Abwärtsbewegung wechselt.

Im Bereich des abwärtslaufenden Trums des Zugelements 11 ist als Mittel zum Verlangsamen der Dreh- und Schwenkbewegung der Kolben-Zylinder-Einheiten 12 ein Führungselement 27 mit einer Führungsbahn 28 vorgesehen, auf der eine sich abwärts bewegende Kolben-Zylinder-Einheit 12 bei der Schwenkbewegung mit ihren Griffelementen 15 geführt wird.

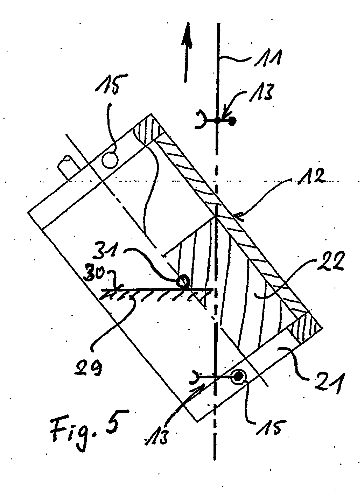

Ferner ist im Bereich des aufwärtslaufenden Trums des Zugelements 11 eine Stützvorrichtung 29 mit einer Auflage-Gleit-Fläche 30 vorgesehen, auf der eine sich nach oben bewegenden Kolben-Zylinder-Einheit 12 mit ihren anfangs oberen später unteren Griffelementen 15 abgestützt wird. während die Relativlage der Kolben-Zylinder-Einheit 12 zur Schwerkraft umgedreht wird. Wie in Fig 5 dargestellt ist, kann die Stützvorrichtung 29 auch so angeordnet sein, daß sich eine Kolben-Zylinder-Einheit 12 mit speziellen Stützelementen 31 darauf abstützt, die so an der Kolben-Zylinder-Einheit 12 angeordnet sind, daß die Kolben-Zylinder-Einheit 12 im Wesentlichen in ihrem Schwerpunkt unterstützt wird, so daß die aufwärts laufende Seite der Transporteinrichtung um das gesamte Gewicht einer Kolben-Zylinder-Einheit 12 entlastet wird.

Die Ringleitung 25 und die einzelnen Zweigleitungen 24, über die die einzelnen Zylinderräume mit der Ringleitung 25 verbindbar sind, ist in Figur 3 nur rein schematisch angedeutet.

Grundsätzlich ist es möglich die einzelnen Zylinderkammern der Kolben-Zylinder-Einheiten 12 mit einem Medium zu befüllen, daß unter dem normalen Umgebungsdruck steht. Es ist kann jedoch auch vorgesehen sein, beim Befüllen der Zylinderkammern das Medium unter einen gegenüber dem normalen Umgebungsdruck erhöhten Druck zu setzen, um Reibungskräfte bei der Verschiebung der Kolben 22 zumindest teilweise zu kompensieren. Ferner ist es möglich, Druckspeicher für die Kolben-Zylinder-Einheiten 12 anzuordnen, um den gewünschten Druck in den Zylinderkammern aufrechtzuerhalten.

Im folgenden wird der Betrieb der erfidungsgemäßen Vorrichtung näher erläutert.

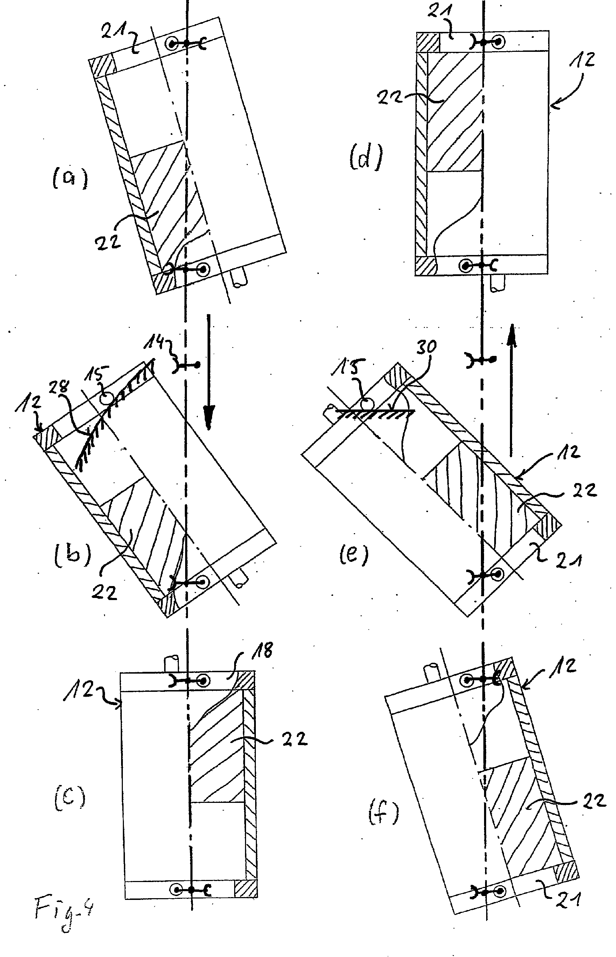

Wie in Figur 1 zu erkennen ist, ist die rechts dargestellte nach oben laufende Kolben-Zylinder-Einheit 12 so am Zugelement 11 angeordnet, daß die Zylinderraumöffnung 21 in Bewegungsrichtung vorne, also oben ist, während gleichzeitig auch der Kolben 22 sich benachbart zur Zylinderöffnung 21 befindet, so daß die Kolben-Zylinder-Einheit 12 das größtmögliche Volumen aufweist. Der Kolben 22 wird dabei durch ein Flüssigkeits-, Gasoder Luftpolster im Zylinderraum gegen die Schwerkraft in seiner oberen Stellung gehalten, da das Absperrventil 26 in der Zweigleitung 24 geschlossen ist. Dieser Zustand ist auch in der Darstellung (d) in Figur 4 dargestellt.

Sobald eine nach oben laufende Kolben-Zylinder-Einheit 12 im Bereich der Umlenkeinrichtung 10 aus der bisherigen Bewegungsrichtung heraus seitlich verschoben wird. sobald also beim Wechsel der Bewegungsrichtung die Verschiebung der Kolben-Zylinder-Einheit 12 quer zu ihrer Hauptachse beginnt oder kurz vorher, wird das untere Haltemittel 13 gelöst, so daß die Kolben-Zylinder-Einheit nur noch am oberen Haltemittel 13 hängt.

Während der Querverschiebung der Kolben-Zylinder-Einheit 12 zum Wechsel der Bewegungsrichtung wird das Absperrventil 26 geöffnet. Gleichzeitig wird auch das Absperrventil 26 einer weiteren Kolben-Zylinder-Einheit geöffnet, die zu diesem Zeitpunkt im Bereich der unteren Umlenkeinrichtung 10' beim Wechsel der Bewegungsrichtung seitlich verschoben wird. Der Kolben 22 wird daher durch die Schwerkraft nach unten in seine von der Zylinderöffnung 21 entfernt liegende Stellung bewegt, in der die Kolben-Zylinder-Einheit ihr kleinstmögliches Volumen besitzt. Sobald der Kolben 22 am Boden 18 anliegt, wird das Absperrventil 26 wieder geschlossen. Außerdem gelangen die bei der seitlichen Verschiebung der Kolben-Zylinder-Einheit 12 freien unteren Griffelemente 15 in Eingriff mit rechts vom abwärts laufenden Trum des Zugelements 11 liegenden Greifern 14, so daß die Kolben-Zylinder-Einheit 12 schräg zu den Zugelementen 11 gehalten ist, wie links in Figur 1 und in der Darstellung (a) in Figur 4 gezeigt ist.

Bei dem Bewegungsrichtungswechsel wurde der nachlaufende Boden 18 zum vorlaufenden Element während die bei der Aufwärtsbewegung vorlaufende Zylinderöffnung 21 zum nachlaufenden Element wurde.

Um die nachlaufende Zylinderöffnung 21 wieder zum vorlaufenden Element zu machen, führt die Kolben-Zylinder-Einheit 12 eine Schwenkbewegung um etwa 180° durch. Hierzu werden, wie in der Darstellung (b) von Figur 4 gezeigt ist, die die oberen Griffelemente 15 haltenden Greifer 15 geöffnet, so daß die Kolben-Zylinder-Einheit 12 unmittelbar mit der Schwenkbewegung beginnt. Das Öffnen der Greifer 14 erfolgt dabei so. daß die freigegebenen Griffelemente 15 mit einer Führungsbahn 28 in Eingriff kommen, die ein Durchschwingen der relativ zum Zugelement 11 um eine von seinen unteren Griffelementen festgelegte Schwenkachse schwenkende Kolben-Zylinder-Einheit 12 zu verhindern. Nach Beendigung der Schwenkbewegung der Kolben-Zylinder-Einheit 12, die durch das Zusammenwirken der Griffelemente 15 und der Führungsbahn 28 kontrolliert wurde, gelangt die Kolben-Zylinder-Einheit 12 mit ihren im Bereich der Zylinderöffnung 21 vorgesehenen Griffelemente 15 in Eingriff mit links von Zugelement liegenden Greifern 14, so daß die Kolben-Zylinder-Einheit 12 in der in der Darstellung (c) von Figur 4 gezeigten Weise am Zugelement 11 gehalten ist, in der die Zylinderraumöffnung 21 wieder das vorlaufende Element ist. Hierbei wird der Kolben 22 durch den Umgebungsdruck in seiner oben am Boden 18 anliegenden Stellung gehalten, da das Absperrventil 26 geschlossen ist.

Sobald die Kolben-Zylinder-Einheit 12 im Bereich der unteren Umlenkeinrichtung 10' mit ihrem vorlaufenden Ende aus der bisherigen Bewegungsrichtung ausgelenkt wird, öffnen die vorderen unteren Greifer 14, so daß die Kolben-Zylinder-Einheit 12 hängend quer zu ihrer Längsachse verschoben werden kann. Bei dem Bewegungsrichtungswechsel, der synchron mit einem entsprechenden Bewegungsrichtungswechsel im Bereich der oberen Umlenkeinrichtung 10 erfolgt, werden die Absperrventile 26 der beim Bewegungsrichtungswechsel befindlichen Kolben-Zylinder-Einheiten 12 geöffnet, so daß die Kolben von der Schwerkraft verschoben werden können. Demzufolge läuft der Kolben 22 aus der in Figur 4. Darstellung (c) gezeigten Stellung in die in Figur 4, Darstellung (f) gezeigte Position, in der der Kolben 22 am Ringflansch 20 anliegt. Das bisher rechts vom Zugelement 11 gehaltene nachlaufende obere Ende der Kolben-Zylinder-Einheit 12 wird nach dem Bewegungsrichtungswechsel auf der linken Seite des Zugelements 11 gehalten und bildet das obere vorlaufende Ende. Das untere nachlaufende Ende wird von einem auf der Außenseite des Zugelements 11 befindlichen Greifer 14 erfaßt, der im Bereiche des aufwärstlaufenden Trums des Zugelements 11 auf der rechten Seite des Zugelements 11 liegt. Nun hängt die Kolben-Zylinder-Einheit 12 wiederum schräg am Zugelement 11.

Um bei der Aufwärtsbewegung die nachlaufende Zylinderöffnung 21 wieder zum vorlaufenden Element zu machen, ist auch bei der Aufwärtsbewegung der Kolben-Zylinder-Einheiten 12 eine Drehung um etwa 180° erforderlich. Hierzu werden, wie in der Darstellung (e) in Figur 4 gezeigt ist, wiederum die oberen Griffelemente 15 von den Greifern 14 freigegeben. Da die freigegebenen Griffelemente 15 aber am vorlaufenden Ende der Kolben-Zylinder-Einheit 12 angeordnet sind, können die Griffelemente 15 auf einer Auflage-Gleit-Fläche 30 abgelegt werden, so daß die bei der Aufwärtsbewegung während der Schwenkbewegung der Kolben-Zylinder-Einheit 12 auf das Zugelement 11 wirkende Gewichtskraft der schwenkenden Kolben-Zylinder-Einheit 12 zeitweilig reduziert werden kann, was zu einer Vergrößerung der Differenz zwischen den aufwärts- und abwärtswirkenden Kräften führt.

Wie in Figur 5 dargestellt ist, können spezielle Stützelemente 31 (von denen nur eines gezeigt ist) anstelle der oberen Griffelemente 15 zum Abstützen der schwenkenden Kolben-Zylinder-Einheit 12 vorgesehen sein. Die Stützelemente 31 sind dabei so angeordnet, daß die schwenkende Kolben-Zylinder-Einheit 12 praktisch in ihrem Schwerpunkt abgestützt wird, so daß eine maximale Reduzierung der auf das aufwärtslaufende Trum des Zugelements 11 wirkenden Gewichtskraft während der Schwenkbewegung der Kolben-Zylinder-Einheit 12 erzielt wird.

Nach Beendigung der Schwenkbewegung, bei der die Griffelemente 15 eine Verschiebebewegung senkrecht zur Bewegungsrichtung des Zugelements 11 ausführen, werden die nunmehr unteren, nachlaufenden Griffelemente 15 von entsprechenden auf der Innenseite des aufwärtslaufenden Trums des Zugelements 11 liegenden Greifern 14 erfaßt, so daß die Kolben-Zylinder-Einheit 12 wieder gerade an den Zugelementen 11 gehalten ist.

Die Betätigung der Greifer 14 und der Ventile 26 erfolgt durch eine nicht näher dargestellte Steuereinrichtung.

Um mit der beschriebenen Vorrichtung ein Drehmoment erzeugen zu können, ist es erforderlich, daß die Vorrichtung in einem Fluid betrieben wird, dessen Dichte größer ist, als das in den Zylindern eingesperrte Gas. Insbesondere läßt sich die Vorrichtung in Wasser betreiben, während das Gas in den Zylinderkammern Luft ist.

Unter der Voraussetzung, daß die Kolben-Zylinder-Einheiten 12 alle praktisch gleich aufgebaut sind, daß die also alle das gleiche Gewicht, das gleiche größtmögliche Volumen und das gleiche kleinstmögliche Volumen besitzen, ergibt sich die resultierende Auftriebskraft $F_R$ für jedes der Kolben-Zylinder-Paare, die sich nicht gerade im Bewegungsrichtungswechsel befinden, aus der Differenz zwischen dem größtmöglichen und dem kleinstmöglichen Volumen $\Delta V$, der Differenz zwischen der Dichte des umgebenden Mediums $\rho_f$ und der Dichte des im Zylinderraum befindlichen Mediums $\rho_m$ und der Erdbeschleunigung g und berechnet sich nach folgender Gleichung:

$$F_R = g * (\rho_f - \rho_m) * \Delta V$$

Sind beispielsweise vier Paare von Kolben-Zylinder-Einheiten 12 vorgesehen, so beträgt die resultierende Auftriebskraft 3 $F_R$ bis 4 $F_R$ je nachdem ob sich alle vier Paare in Aufwärts- bzw. Abwärtsrichtung bewegen, oder ob ein Paar beim Bewegungsrichtungswechsel ist. Während der Zeit während der eine der Kolben-Zylinder-Einheiten bei der Aufwärtsbewegung die Schwenkbewegung ausführt, erhöht sich die nach oben gerichtete Auftriebskraft noch um den Wert a * G, wobei a eine Variable zwischen 0 und 1 und G das Gewicht einer Kolben-Zylinder-Einheit 12 ist. Die Variable a hängt dabei von der Lage der Griffelemente 15 auf der Auflage-Gleit-Fläche 30 ab und beschreibt den Anteil der Gewichtskraft der auf der Auflage-Gleit-Fläche 30 abgestützt ist.

Zweckmäßigerweise kann die Schwenkbewegung der Kolben-Zylinder-Einheiten bei der Aufwärtsbewegung jeweils dann durchgeführt werden, wenn ein Bewegungsrichtungswechsel erfolgt. Hierdurch läßt sich erreichen, daß die Schwankungen der nach oben gerichteten Kraft minimiert werden.

Um sicherzustellen, daß der Kolben 22 gegen die auf seine freie Fläche wirkende, entgegen der Schwerkraft nach oben gerichtete Kraft, die durch den jeweils herrschenden Wasserdruck bewirkt wird, in seine ausgefahrene Stellung verschoben werden kann, wird die Kolbenlänge $l_k$ vorzugsweise so gewählt, daß sie der folgenden Gleichung genügt:

$$l_k \geq 0{,}5 * h * \frac{\rho_f}{\rho_k}$$

Dabei ist h die größtmögliche Eintauchtiefe der Kolben-Zylinder-Einheit 12 und damit des Kolbens 22, also der Abstand der tiefsten Stellung der freien Fläche des Kolbens 22 von der Wasseroberfläche, $\rho_k$ die Dichte des Kolbenmaterials und $\rho_f$ die Dichte der umgebenden Flüssigkeit, also vorzugsweise die Dichte von Wasser. Ist anstelle einer inkompressiblen Flüssigkeit ein Gas in den Zylinderräumen der Kolben-Zylinder-Einheiten vorgesehen, so wird die Kolbenlänge zweckmäßigerweise so gewählt, daß sie der folgenden Gleichung genügt:

$$l_k \geq h * \frac{\rho_f}{\rho_k}$$

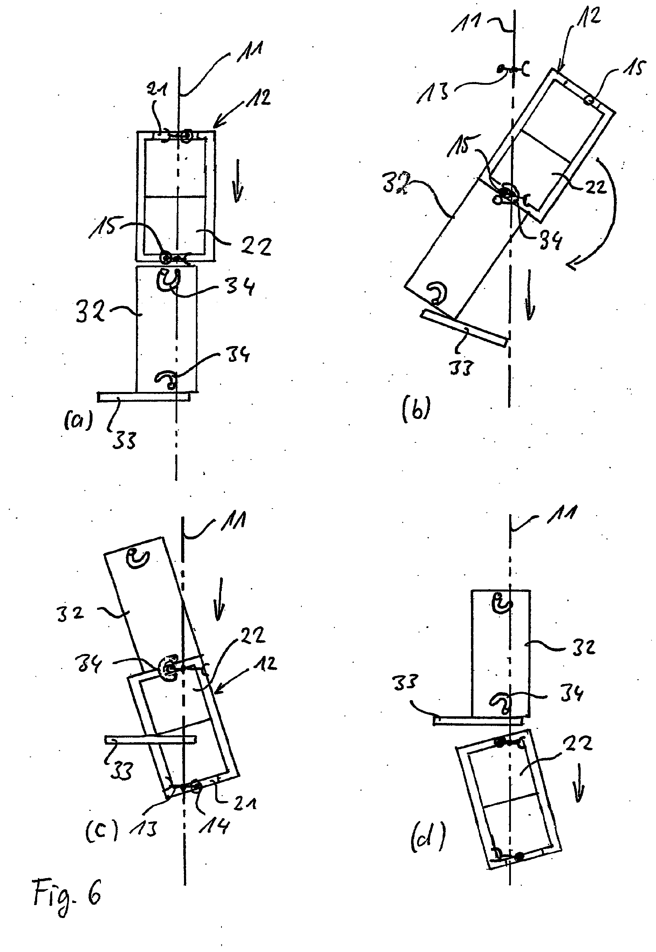

Bei einer anderen Ausgestaltung der Erfindung ist, wie in den verschiedenen Darstellungen in Figur 6 gezeigt ist, als Vorrichtung zum Verlangsamen bzw. Steuern der Dreh- oder Schwenkbewegung der Kolben-Zylinder-Einheii 12 während der Abwärtsbewegung ein Zusatzgewicht 33 vorgesehen, das von einer rein schematisch angedeuteten Haltevorrichtung 33 so im Bereich der Transporteinrichtung gehalten ist, daß es mit einer sich abwärts bewegenden Kolben-Zylinder-Anordnung 12 koppelbar ist. Das Zusatzgewicht 32 weist als Kupplungsmittel beispielsweise Greifhaken 34 auf, die mit den Griffelementen 15 der Kolben-Zylinder-Einheiten 12 zusammenwirken, um das Zusatzgewicht an einer sich abwärts bewegenden Kolben-Zylinder-Einheit 12 anzukoppeln.

Wie in Figur 6(a) dargestellt ist, ist das Zusatzgewicht 32 relativ zu einer sich abwärts bewegenden Kolben-Zylinder-Einheit 12 so angeordnet, daß der Schwerpunkt des Systems Kolben-Zylinder-Einheit 12 und Zusatzgewicht 32 gegenüber dem die Drehachse des Systems bildenden Griffelement 15 nach oben und seitlich versetzt ist, um eine Drehbewegung zu bewirken, die im dargestellten Ausführungsbeispiel im Uhrzeigersinn erfolgt, wie dies durch den Pfeil in Figur 6(b) angedeutet ist.

Sobald eine abwärts laufende Kolben-Zylinder-Einheit 12 auf dem Zusatzgewicht 32 aufsetzt, werden die beiden oberen Greifhaken 34, von denen nur einer gezeigt ist, mit den beiden unteren Griffelementen 15 der Kolben-Zylinder-Einheit 12 in Eingriff gebracht, um das Zusatzgewicht 32 mit der Kolben-Zylinder-Einheit 12 zu koppeln. Unmittelbar anschließend gibt das obere lösbare Haltemittel 13 am Zugelement 11 die oberen Griffelemente 15 der Kolben-Zylinder-Einheit 12 frei, so daß das System aus Kolben-Zylinder-Einheit 12 und Zusatzgewicht 32 eine Drehbewegung um die unteren Griffelemente 15 ausführt. Hierbei weicht die Haltevorrichtung 33 aus, um die Drehbewegung nicht zu behindern.

Bei der weiteren Abwärtsbewegung führt das System aus Zusatzgewicht 32 und Kolben-Zylinder-Einheit 12 die Drehbewegung so lange aus, bis die freien Griffelemente 15 als untere Griffelemente von Greifern 14 am Zugmittel 11 erfaßt werden, wie dies in Figur 6(c) dargestellt ist. Das Zusatzgewicht 32 bleibt dabei weiterhin mit der Kolben-Zylinder-Einheit 12 solange gekoppelt, bis es auf der Stützeinrichtung 33 abgesetzt werden kann, wie dies in Figur 6(d) gezeigt ist. Die Greifhaken 34 werden dabei aiso erst dann gelöst, wenn das Zusatzgewicht 32 von der rein schematisch angedeuteten Haltevorrichtung 33 wieder gehalten wird.

Durch das erfindungsgemäß vorgesehene Zusatzgewicht 32 läßt es sich erreichen, daß die Schwenkbewegung der Kolben-Zylinder-Einheit 12 bzw. die Drehbewegung des Systems aus Kolben-Zylinder-Einheit 12 und Zusatzgewicht 32 relativ langsam erfolgt, da durch die verhältnismäßig nahe Anordnung des Schwerpunkts des Systems an der Drehachse nur ein relativ kleines Drehmoment auf das System wirkt. Die während der Dreh- oder Schwenkbewegung freien Griffelemente 15 lassen sich daher zuverlässig von den Greifern 14 ergreifen, ohne daß die weitere Bewegung der Transporteinrichtung durch ein übermäßiges Überschwingen gestört würde.

Ein weiterer Vorteil der Verwendung eines Zusatzgewichts 32 als Vorrichtung zur Verlangsamung oder Steuerung der Dreh- oder Schwenkbewegung der Kolben-Zylinder-Einheit 12 besteht darin, daß auf der abwärtslaufenden Seite der Transporteinrichtung die gesamte nach unten gerichtete Kraft vergrößert wird, wodurch sich der Wirkungsgrad der erfindungsgemäßen Vorrichtung deutlich verbessern läßt, insbesondere wenn gleichzeitig auf der aufwärts laufenden Seite durch eine Abstützung der jeweils schwenkenden Kolben-Zylinder-Einheit 12 eine Verringerung der nach unten gerichteten Kraft bewirkt wird.

Die Erfindung schafft also eine Vorrichtung mit umlaufenden Körpern, insbesondere zur Erzeugung eines Drehmoments, bei der die Lage der einzelnen Körper relativ zu ihrer Bewegungsrichtung jeweils beim Bewegungsrichtungswechsel umgekehrt wird, so daß eine Bewegung der Körper quer zu ihrer Längsrichtung ermöglicht wird, und bei der die Lage der Körper während der Auf- und Abwärtsbewegung erneut umgekehrt wird, so daß vor jedem Bewegungsrichtungswechsel die vorlaufende Seite des Körpers dieselbe ist. Die erfinderische Vorrichtung läßt sich nicht nur - wie beschrieben - zur Drehmomenterzeugung einsetzen, sondern auch beispielsweise als Fördereinrichtung. In diesem Fall wären die Körper als Aufnahmebehälter oder Föderkörbe auszubilden.

**Patentansprüche**

1.  Vorrichtung, insbesondere zur Erzeugung eines Drehmoments, mit zumindest zwei jeweils eine Hauptachse (16) aufweisenden Körpern (12). die über eine umlaufende Transporteinrichtung (11) so mit einander gekoppelt sind, daß

    -   sie eine Umlaufbewegung ausführen können, bei der sich der eine Körper (12) in Richtung der Schwerkraft und der andere entgegensetzt dazu bewegt,
    -   die Hauptachsen (16) der Körper (12) bei der Bewegung der Körper (12) in oder entgegen der Schwerkraft im wesentlichen parallel zur Bewegungsrichtung verlaufen, während die Körper (12) beim Wechsel der Bewegungsrichtung im wesentlichen quer zu ihrer Hauptachse verschoben werden, und

    -   die Körper (12) nach jedem Wechsel der Bewegungsrichtung während ihrer Bewegung mit oder entgegen der Schwerkraft so um eine quer zu ihrer Hauptachse (16) verlaufende Achse dreh- oder schwenkbar sind, daß die jeweils nachlaufende Seite des Körpers (12) zur vorlaufenden wird.

2.  Vorrichtung nach Anspruch 1, **dadurch gekennzeichnet, daß** die Transporteinrichtung ein endloses Transportmittel (11) aufweist, das über eine erste und eine zweite Umlenkeinrichtung (10, 10') geführt ist, und daß die Körper (12) jeweils im Bereich ihrer vorlaufenden und ihrer nachlaufenden Seite über lösbare Haltemittel (13) mit dem Transportmittel (11) derart verbunden sind, daß jeweils eine Dreh- oder Schwenkachse gebildet ist, um die der Körper (12) dreh- oder schwenkbar ist, wenn die Haltemittel (13) im Bereich der anderen Seite gelöst sind.

3.  Vorrichtung nach Anspruch 2, **dadurch gekennzeichnet, daß** als Haltemittel (13) am Transportmittel mit Griffelementen (15) an den Körpern (12) zusammenwirkende Greifmittel (14) vorgesehen sind, die zum Ergreifen und Freigeben jeweiliger Griffelemente (15) an den Körpern (12) steuerbar sind.

4.  Vorrichtung nach Anspruch 3. **dadurch gekennzeichnet, daß** die Greifmittel (14) in Längsrichtung des Transportmittels (11) gleiche Abstände zueinander aufweisen, die gleich dem entsprechenden Abstand der Griffelemente (15) an jedem der Körper (12) sind.

5.  Vorrichtung nach Anspruch 3 oder 4, **dadurch gekennzeichnet, daß** die Greifmittel jeweils erste und zweite Greifer (14) aufweisen, von denen die einen bezüglich des geschlossenen Umlaufweges innen und die anderen außen am Transportmittel (11) vorgesehen sind.

6.  Vorrichtung nach Anspruch 3, 4 oder 5, **dadurch gekennzeichnet, daß** die jeweils eine Dreh- oder Schwenkachse des Körpers (12) festlegenden Griffelemente (15) so am Körper (12) angeordnet sind, daß die jeweilige Dreh- oder Schwenkachse gegen die durch den Schwerpunkt des Körpers (12) verlaufende Hauptachse (16) versetzt ist.

7.  Vorrichtung nach Anspruch 6, **dadurch gekennzeichnet, daß** die im Bereich der vorlaufenden und der nachlaufenden Seite liegenden Dreh- oder Schwenkachsen der Körper (12) in einer zu ihnen senkrechten, durch den Schwerpunkt des Körpers (12) verlaufenden Ebene gesehen, einander bezüglich des Schwerpunkts des Körpers (12) diametral gegenüberliegen.

**8.** Vorrichtung nach Anspruch 6 oder 7, **dadurch gekennzeichnet, daß** der Versatz der Dreh- oder Schwenkachsen gegen die durch den Schwerpunkt des Körpers (12) verlaufende Hauptachse (16) entsprechend dem Abstand der Greifer (14) eines Greifmittels so gewählt ist, daß die Hauptachse (16) des Körpers (12) parallel zur Bewegungsrichtung liegt, wenn die die bezüglich des Transportmittels nach innen versetzte Dreh- oder Schwenkachse festlegenden Griffelemente (15) von innenliegenden Greifern (14) gehalten werden, während die die bezüglich des Transportmittels (11) nach außen versetzte Dreh- oder Schwenkachse festlegenden Griffelemente (15) mit außenliegenden Greifern (14) in Eingriff sind.

**9.** Vorrichtung nach einem der Ansprüche 1 bis 8, **dadurch gekennzeichnet, daß** Mittel (27, 28; 29, 30) zum Verlangsamen und/oder Steuern der Dreh- oder Schwenkbewegung der Körper (12) vorgesehen sind.

**10.** Vorrichtung nach Anspruch 9, **dadurch gekennzeichnet, daß** der Transporteinrichtung (11) im Bereich der Bewegung in Richtung der Schwerkraft eine Führungsbahn (28) zugeordnet ist, auf der ein bei der Dreh- oder Schwenkbewegung freier Abschnitt des Körpers (12) während der Dreh- oder Schwenkbewegung abstützbar ist.

**11.** Vorrichtung nach Anspruch 9, **dadurch gekennzeichnet, daß** der Transporteinrichtung (11) im Bereich der Bewegung in Richtung der Schwerkraft ein Zusatzgewicht (32) zugeordnet ist, das mit einem sich in Richtung der Schwerkraft bewegenden Körper (12) derart koppelbar ist, daß der Körper (12) bei der gemeinsamen Drehbewegung von Körper (12) und Zusatzgewicht (32) im Wesentlichen eine Schwenkbewegung um den gemeinsamen Schwerpunkt ausführt.

**12.** Vorrichtung nach Anspruch 9, 10 oder 11, **dadurch gekennzeichnet, daß** der Transporteinrichtung (11) im Bereich der Bewegung entgegen der Schwerkraft eine Stützvorrichtung (30) zugeordnet ist, auf der ein bei der Dreh- oder Schwenkbewegung freier Abschnitt des Körpers (12) während der Dreh- oder Schwenkbewegung abstützbar ist.

**13.** Vorrichtung nach Anspruch 12, **dadurch gekennzeichnet, daß** der freie Abschnitt des Körpers (12) während der Dreh- oder Schwenkbewegung im Wesentlichen in seinem Schwerpunkt auf Stützvorrichtung (30) abstützbar ist.

**14.** Vorrichtung nach einem der Ansprüche 1 bis 13, **dadurch gekennzeichnet, daß** als Transportmittel (11) zwei zueinander parallele Transportbänder, Transportketten oder Transportriemen vorgesehen, zwischen denen die Körper (12) angeordnet sind.

**15.** Vorrichtung nach einem der vorstehenden Ansprüche, **dadurch gekennzeichnet, daß** jeder Körper (12) beim Wechsel der Bewegungsrichtung sein Volumen so ändert, daß das Volumen des bzw. der sich in Richtung der Schwerkraft bewegenden Körper (12) kleiner ist als das der sich in entgegengesetzter Richtung bewegenden Körper (12).

**16.** Vorrichtung nach einem der vorstehenden Ansprüche, **dadurch gekennzeichnet, daß** jeder Körper eine Kolben-Zylinder-Einheit (12) umfaßt, deren Kolben (22) in Abhängigkeit von der Ausrichtung der Kolben-Zylinder-Einheit (12) zur Schwerkraft von der auf ihn wirkenden Gewichtskraft in seine ausgefahrene oder eingeschobene Stellung bewegbar ist und deren Zylinderkammer über eine Absperrvorrichtung mit zumindest einer weiteren Zylinderkammer einer anderen Kolben-Zylinder-Einheit (12) verbindbar ist.

**17.** Vorrichtung nach Anspruch 16, **dadurch gekennzeichnet, daß** die Zylinderkammern aller Kolben-Zylinder-Einheiten (12) über entsprechende Zweigleitungen (24) mit einer Ringleitung (25) verbunden sind, die an der Transporteinrichtung (11) gehalten ist.

**18.** Vorrichtung nach Anspruch 16 oder 17, **dadurch gekennzeichnet, daß** die Kolbenlänge $l_k$ der folgenden Gleichung genügt:

$$l_k \geq 0{,}5 * h * \frac{\rho_f}{\rho_k}$$

wobei h die maximale Eintauchtiefe des Körpers in eine Flüssigkeit, $\rho_f$ die Dichte der Flüssigkeit und $\rho_k$ die Dichte des Kolbenmaterials sind.

Fig. 1

Fig-2

Fig. 3

Fig-4

Fig. 5

Fig. 6

**Europäisches Patentamt**

## EUROPÄISCHER RECHERCHENBERICHT

Nummer der Anmeldung

EP 01 10 3462

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | EP 0 930 433 A (THIEN) 21. Juli 1999 (1999-07-21) * Zusammenfassung; Abbildungen 1-3 * | 1 | F03B17/02 |
| A | DE 37 26 199 A (MAURITSCH) 17. Dezember 1987 (1987-12-17) * Spalte 2, Zeile 49 - Zeile 63 * * Spalte 3, Zeile 16 - Zeile 29 * * Spalte 3, Zeile 43 - Zeile 66 * * Spalte 4, Zeile 2 - Zeile 4 * * Spalte 5, Zeile 47 - Spalte 6, Zeile 47; Abbildungen 1-10 * | 1 | |
| A | GB 163 791 A (MERZ) 24. Mai 1921 (1921-05-24) * Seite 1, Zeile 80 - Zeile 85 * * Seite 2, Zeile 15 - Zeile 42 * * Seite 2, Zeile 101 - Zeile 119; Abbildungen 1,2 * | 1 | |
| A | DE 165 479 C (LEISTLER) * Anspruch 1; Abbildungen 1,2 * | 1 | RECHERCHIERTE SACHGEBIETE (Int.Cl.7) F03B F03G |

Der vorliegende Recherchenbericht wurde für alle Patentansprüche erstellt

| Recherchenort | Abschlußdatum der Recherche | Prüfer |
|---|---|---|
| DEN HAAG | 12. Juli 2001 | Joris, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 10 3462

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-07-2001

| Im Recherchenbericht angeführtes Patentdokument | | Datum der Veröffentlichung | Mitglied(er) der Patentfamilie | | Datum der Veröffentlichung |
|---|---|---|---|---|---|
| EP 930433 | A | 21-07-1999 | AU | 2620299 A | 02-08-1999 |
| | | | BR | 9904822 A | 23-05-2000 |
| | | | CN | 1255958 T | 07-06-2000 |
| | | | DE | 29812463 U | 08-10-1998 |
| | | | WO | 9936694 A | 22-07-1999 |
| | | | HU | 0003170 A | 29-01-2001 |
| | | | LT | 99115 A,B | 25-04-2000 |
| | | | LV | 12445 A | 20-03-2000 |
| | | | NO | 994559 A | 20-09-1999 |
| | | | PL | 335760 A | 22-05-2000 |
| | | | SK | 126999 A | 16-05-2000 |
| | | | TR | 9902289 T | 22-05-2000 |
| DE 3726199 | A | 17-12-1987 | KEINE | | |
| GB 163791 | A | 24-05-1921 | KEINE | | |
| DE 165479 | C | | FR | 340380 A | |

EPO FORM P0461

Für nähere Einzelheiten zu diesem Anhang : siehe Amtsblatt des Europäischen Patentamts, Nr.12/82